# DEMANDE DE BREVET EUROPEEN

(11) **EP 1 083 702 A1**
(43) Date de publication de la demande: **14.03.2001**
(21) Numéro de dépôt: 00402468.3
(22) Date de dépôt: 07.09.2000
(51) Int. Cl.: H04L 12/24, H04L 12/18, H04L 9/32, G06F 17/60, G07F 7/08

(54) **Procédé de gestion d'une rémunération conditionnée par un message reçu dans un terminal multimédia**

(30) Priorité: 09.09.1999 FR 9911397
(71) Demandeur: SAGEM S.A., 75016 Paris (FR)
(72) Inventeur: Meulle, Philippe, 78300 Poissy (FR)
(74) Mandataire: Schmit, Christian Norbert Marie

(57) **Abrégé**

Pour permettre d'obtenir des avantages en contrepartie de la visualisation d'un message (11), on contrôle, dans l'invention, que le message (11) à visualiser a bien été visualisé. Pour cela on ajoute à un message (10) reçu un message (25) de contrôle permettant de tester que le destinataire a bien pris connaissance du message (11) à visualiser. Dans ce cas, on met à disposition du destinataire une valeur (13) de crédit associé au message (11) à visualiser.

## Description

La présente invention a pour objet un procédé de gestion d'une rémunération conditionné par un message reçu dans un terminal multimédia. Elle s'applique plus particulièrement aux terminaux multimédias pouvant recevoir et traiter des signaux sous une forme numérique. En effet, avec des signaux sous une forme numérique, on peut adjoindre aisément à un message à émettre des informations de signalisation ou de contrôle ou annexes en plus d'une information à visualiser sur un écran de visualisation du terminal multimédia. Le but de l'invention est de fournir, après un contrôle, une rémunération en contrepartie d'une visualisation d'un message à visualiser. Une rémunération est un prix, sous quelque forme que ce soit, d'un service rendu. Dans l'invention, le service rendu est la visualisation du message à visualiser. Une rémunération peut être des points de fidélité, des jetons, voire même de l'argent.

Actuellement, on connaît des systèmes dans lesquels on accepte de diffuser des programmes avec des tarifs préférentiels en contrepartie de l'acceptation de recevoir des messages de type publicitaire. Ce type de système est généralement utilisé sur le réseau informatique Intemet, dans le réseau Internet, le fournisseur de programme associe au message à visualiser des messages publicitaires.

Cette réalisation présente des problèmes. En effet, un problème essentiel est de pouvoir contrôler que le message publicitaire a bien été visualisé. Cependant, lorsque le message est visualisé un destinataire du message ne se trouve pas forcément derrière son écran de visualisation. Ainsi, le message publicitaire a bien été diffusé à l'écran mais sans être vu par le destinataire. En conséquence, la rémunération associée à ce message publicitaire sera tout de même accordée.

La présente invention a pour objet de remédier à ces problèmes en proposant un procédé permettant de contrôler qu'un message rémunérateur visualisé sur un écran a bien été porté à la connaissance d'un destinataire de ce message rémunérateur. Pour cela, on associe au message rémunérateur un moyen d'authentification. Après une visualisation du message rémunérateur on contrôle à l'aide du moyen d'authentification que l'on a bien visualisé le message. Si le contrôle à l'aide du moyen d'authentification est vérifié alors une rémunération est accordée au destinataire du message rémunérateur en mettant à sa disposition une valeur de crédit telle que des points de fidélité, des jetons ou même de l'argent.

Ainsi, avec l'invention, on impose une confiance, avec le moyen d'authentification, entre un fournisseur de tels services et un destinataire de ces services. En conséquence, dans l'invention, on supprime un frein à un accroissement du nombre de fournisseurs de tels services.

L'invention a donc pour objet un procédé de gestion d'un message reçu dans un terminal multimédia comportant un écran de visualisation caractérisé en ce que :
- on produit un message rémunérateur comportant un message à visualiser et un message de crédit associé au message à visualiser, le message de crédit comportant une valeur de crédit et un premier certificat d'authentification,
- on émet le message rémunérateur,
- on reçoit le message rémunérateur en entrée du terminal multimédia,
- on mémorise dans une mémoire temporaire la valeur de crédit et le premier certificat d'authentification,
- on produit un deuxième certificat d'authentification relatif à une visualisation du message à visualiser avec l'écran de visualisation,
- on compare le premier certificat avec le deuxième certificat,
- on valide, en fonction d'un résultat de la comparaison, une autorisation de mettre la valeur de crédit à disposition d'un destinataire du message rémunérateur.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : un exemple d'une architecture d'un terminal multimédia dans lequel est mis en oeuvre le procédé de l'invention ;
- Figure 2 : un exemple, sous forme d'un algorithme, d'un fonctionnement du procédé de l'invention.

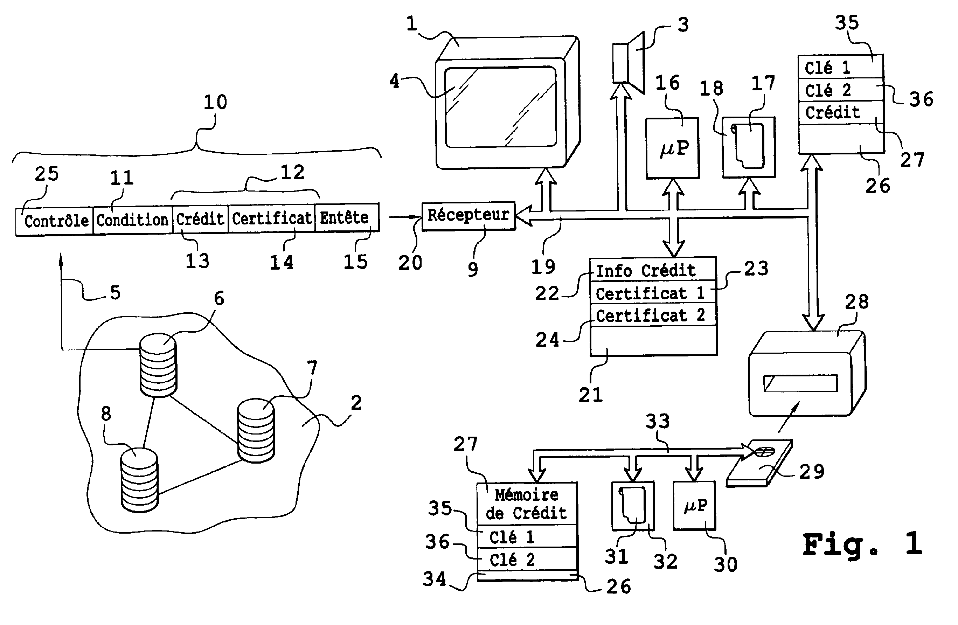

La figure 1 montre une architecture d'un terminal 1 multimédia dans lequel est mis en oeuvre le procédé de l'invention. Un terminal est un appareil permettant un accès à distance à un système informatique tel qu'un réseau 2 de communication. Le terminal 1 est dit multimédia lorsqu'il comporte des moyens permettant principalement de produire des sons acoustiques et de visualiser des images à l'aide d'un haut-parleur 3 et d'un écran 4 de visualisation respectivement. Ces sons et ces images sont produits dans le réseau 2. Ainsi, le terminal 1 est relié au réseau 2 par une liaison 5 transportant notamment des informations relatives à ces sons et à ces images. La liaison 5 peut être une liaison filaire tel qu'un câble coaxial ou encore une fibre optique. Cependant, ce pourrait très bien être aussi une liaison de type hertzienne. Le réseau 2 comporte principalement des bases de données 6, 7 et 8 interconnectées et produisant des informations émises sur la liaison 5 et reçues par le terminal 1 à l'aide d'un récepteur 9. Toutefois, les bases de données 6, 7 et 8 ne sont pas forcément interconnectées. En effet, il se peut que la liaison 5 soit une liaison réservée pour relier une base de données 6, 7 ou 8 au récepteur 9. Plus généralement, le réseau 2 comporte tout système informatique pouvant envoyer des informations à visualiser au terminal 1.

Dans l'invention, on produit dans la base de données 6, par exemple, un message 10 rémunérateur. On émet ce message 10 à travers la liaison 5. Un message rémunérateur est un message qui procure un bénéfice. Dans l'invention ce bénéfice est soumis à une condition. En conséquence, le message 10 comporte un message 11 à visualiser sur l'écran 4 et un message 12 de crédit. Le message 12 est associé au message 11. Le message 12 n'est valide qu'à condition de visualiser le message 11. Une fois cette condition remplie, un utilisateur du terminal 1, ou plus précisément un destinataire du message 10, reçoit un avantage. Pour cela, le message 12 comporte une valeur 13 de crédit et un premier certificat 14 d'authentification. Ainsi l'avantage reçu par le destinataire du message 10 se traduit par la réception de la valeur 13. Le certificat 14 permet de contrôler que la condition a bien été remplie.

Des notions telles que celles de messages, de valeur et de certificats ne traduisent qu'une décomposition schématique d'un signal reçu par le récepteur 9. D'une manière plus rigoureuse, il aurait fallu parler d'un signal produit à partir d'une suite de symboles numériques formant des champs de données. Chaque champ de données comporte alors une information relative à un message à visualiser ou à une valeur de crédit ou encore à un certificat. Cependant, pour assurer une clarté de la description on préférera utiliser ces notions de messages, de valeur et de certificats.

En outre, un destinataire d'un message 10 peut être n'importe quel utilisateur d'un terminal multimédia tel que le terminal 1. Dans ce cas, les messages 10 sont émis par diffusion et ceux des utilisateurs qui prendront connaissance du message 11 associé bénéficieront d'un avantage. En fait, la base de données 6 émet un message 10 de préférence à destination d'un utilisateur dont un profil socioculturel est en adéquation avec un profil socioculturel visé par le message 10.

Ainsi, ce message 10, muni d'un entête 15 permettant principalement d'identifier le message 10, est reçu par le récepteur 9. L'entête 15 peut ainsi permettre d'identifier un destinataire du message 10. Le terminal 1 comporte en outre un microprocesseur 16 commandé par un programme 17 dans une mémoire de programmes 18 et un bus 19 de commandes, de données et d'adresses. On sélectionne avec le microprocesseur 16 le message 10 reçu à une entrée 20 du récepteur 9. Le microprocesseur 16 mémorise dans une mémoire 21 temporaire la valeur 13 et le premier certificat 14 du message 12. Une mémoire temporaire est une mémoire dans laquelle des informations ne sont mémorisées que tant qu'elle reste alimentée par une source d'alimentation. Par opposition, une mémoire permanente est une mémoire avec laquelle des informations sont mémorisées même lorsque cette mémoire n'est plus alimentée. La valeur 13 est mémorisée à un emplacement 22 de la mémoire 21. Le premier certificat 14 est mémorisé à un emplacement 23 de la mémoire 21.

Pour pouvoir bénéficier de la valeur 13 mémorisée à l'emplacement 22 le destinataire du message 10 visualise à l'écran 4 le message 11. Le message 11 peut ou non être associé à un message sonore diffusé par le haut-parleur 3. A la fin de cette visualisation, on produit, dans l'invention, un deuxième certificat d'authentification relatif à une visualisation du message 11 avec l'écran 4. Ainsi, afin de s'assurer que le message 11 a bien été visualisé, le microprocesseur 16 commandé par le programme 17 compare le premier certificat 14 avec le deuxième certificat produit. Dans un exemple, le microprocesseur 16 mémorise le deuxième certificat produit à un emplacement 24 de la mémoire 21. Ainsi le microprocesseur 16 vérifie un contenu à l'emplacement 23 avec un contenu à l'emplacement 24. On valide, en fonction d'un résultat de la comparaison, une autorisation de mettre la valeur 13, mémorisée à l'emplacement 22, à disposition du destinataire du message 10.

Pour pouvoir produire le deuxième certificat d'authentification on émet à travers la liaison 5 et à partir du réseau 2 un message 25 interactif de contrôle. Ce message 25 permet d'interroger le destinataire à propos du message 11 associé. Ainsi, dans cet exemple préféré, on produit le deuxième certificat à partir d'une réponse fournie par le destinataire du message 10.

Dans un fonctionnement du procédé de l'invention, on visualise le message contenu dans le champ 25 sous forme d'un questionnaire relatif au message 11. Par exemple, le destinataire peut se voir poser tout type de questions. Ces questions ont pour but de contrôler que le destinataire a bien pris connaissance d'un contenu du message 11. En conséquence, on produit le deuxième certificat d'authentification à partir d'une réponse au questionnaire. Ainsi, si le destinataire n'a pas visualisé le message 11 alors des réponses au questionnaire du message 25 sont très probablement erronées. Ainsi, un contenu associé au premier certificat 14 est différent du contenu associé au deuxième certificat. En conséquence, la valeur 13 mémorisée à l'emplacement 22 n'est pas attribuée au destinataire.

Dans un exemple simple, le premier certificat comporte les réponses attendues au questionnaire et le deuxième certificat comporte les réponses fournies par le destinataire. Si les réponses fournies sont les mêmes que les réponses attendue alors la condition est remplie.

Dans un exemple préféré, on place le message 25 dans le message 10 de préférence temporellement après le message 11, mais il pourrait être temporellement avant. Dans ce dernier cas, on sauvegarde le message 25 dans une mémoire de sauvegarde dans le terminal 1. Cependant, le message 25 pourrait très bien être un message indépendant du message 10. On pourrait alors émettre le message 25 à la suite du message 10 ou sur un autre canal d'émission tel qu'un canal de signalisation.

Pour mettre la valeur 13 à disposition du destinataire du message 10, le terminal 1 comporte une mémoire 26 permanente. Ainsi, on mémorise à un emplacement 27 de la mémoire 26 la valeur 13 que l'on ajoute à des valeurs de crédit antérieurement acquises. On obtient ainsi à l'emplacement 27 un compte crédit mis à jour après chaque nouvelle validation d'une valeur de crédit associé à un message 10 reçu.

Dans une première variante on place la mémoire 26 dans le terminal 1. Dans un exemple, cette mémoire 26 peut se présenter sous forme d'une mémoire permanente telles que celles utilisées par les ordinateurs généralement appelées disques durs ou encore mémoire de masse. Dans cette deuxième variante, on munit le terminal 1 d'un lecteur 28 de carte à puce. Dans une deuxième variante on place la mémoire 26 dans une carte 29 à puce. Cette carte 29 comporte en outre un microprocesseur 30 commandé par un programme 31 dans une mémoire de programmes 32 et un bus 33 de données, d'adresses et de commandes auxquels sont reliés le microprocesseur 30, la mémoire 32 et la mémoire 26. Ainsi, un accès à l'emplacement 27 de la mémoire 26 est plus difficile à réaliser sans autorisation lorsque la mémoire 26 est dans la carte 29 plutôt que dans le terminal 1. De plus, la mémoire 26 dans la carte 29 comporte un emplacement 34 dans lequel sont mémorisées des informations d'identification d'un porteur de la carte 29. En conséquence, lorsque la mémoire 26 est placée dans la carte 29, le terminal 1 peut être associé à plusieurs destinataires identifiables simplement en lisant un contenu mémorisé à l'emplacement 34 qui est différent entre deux cartes 29.

Le message 10 comporte deux informations sensibles qui sont la valeur 13 et le premier certificat 14. Pour assurer un accès sécurisé à la valeur 13, on chiffre, lors de la production du message 10, la valeur 13. En conséquence, on mémorise une première clé de déchiffrement à un emplacement 35 de la mémoire 26. Cette première clé de déchiffrement permet de déchiffrer la valeur 13 ainsi chiffrée. Le programme 31 ou 17, selon un endroit où la mémoire 26 est placée, comporte un procédé de déchiffrement permettant d'utiliser cette première clé de déchiffrement.

En outre, ou dans une autre variante, on chiffre, lors de la production du message 10, le message 12. De même, on mémorise une deuxième clé de déchiffrement dans la mémoire 26 à un emplacement 36. Cette deuxième clé de déchiffrement permet de déchiffrer le message 12 chiffré. Cette deuxième clé utilise pour cela un procédé de déchiffrement mis en oeuvre par le programme 31 ou le programme 17 selon un endroit où la mémoire 26 est placée. Dans ces deux dernières variantes seules les deux informations sensibles ont été chiffrées mais il est évident qu'on aurait tout aussi bien pu chiffrer tout le message 10.

Les valeurs de crédit ainsi accumulées à l'emplacement 27 de la mémoire 26 peuvent par la suite être utilisées pour obtenir certaines facilités quant à l'utilisation de certains services accessibles à travers notamment le réseau 2. Cependant, la carte 29 peut très bien être une carte à puce de type carte bancaire ou porte-monnaie électronique. Dans ce cas, la valeur de crédit mémorisée à l'emplacement 27 correspondait à une somme d'argent, mais ce pourrait être des jetons, des points fidélité ou plus généralement toute valeur permettant au destinataire d'obtenir un avantage en retour d'une visualisation du message 11.

On pourrait dans une variante n'utiliser qu'une seule mémoire de type non volatile en remplacement de la mémoire 21 et de la mémoire 26. Ainsi, on placerait dans cette mémoire non volatile les informations mémorisées dans les emplacements 22, 23, 24, 27, 35 et 36.

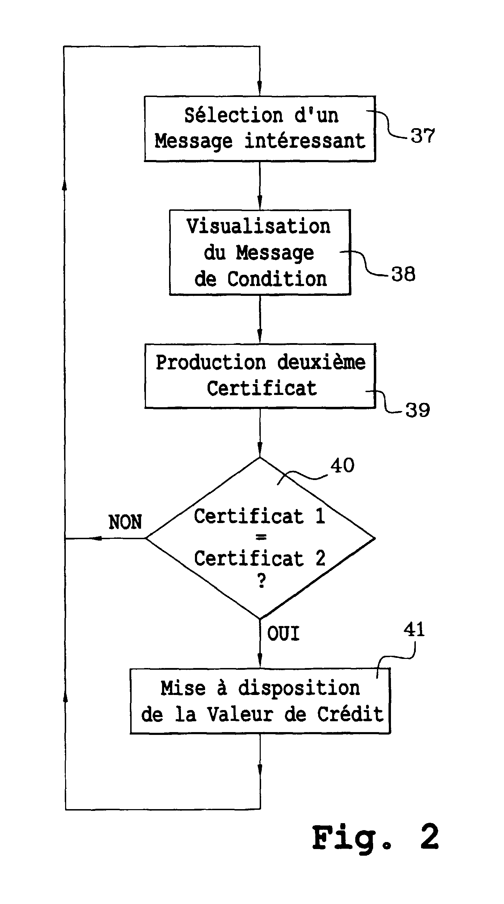

La figure 2 montre, sous forme d'un algorithme, un exemple des différentes étapes du procédé de l'invention. Ainsi, dans une première étape 37, on sélectionne un message dit intéressant c'est-à-dire un message rémunérateur tel que le message 10. Ce message est intéressant car il est une source possible de profit pour un destinataire du message 10 sélectionné. Dans une étape 38, on visualise le message 11 associé à la valeur 13 et au premier certificat 14. Dans une étape 39 et après visualisation du message 11, on produit un deuxième certificat d'authentification. Un contenu de ce deuxième certificat est comparé, lors d'une étape 40 de test, avec un contenu du premier certificat 14. En cas d'égalité, entre le contenu de premier certificat 14 et le contenu du deuxième certificat on met à disposition, dans une étape 41, la valeur 13 associée au message 10 sélectionné. En cas d'inégalité, le procédé de l'invention se termine sans mettre à disposition du destinataire du message 10 la valeur 13 associée à ce même message 10.

Dans un cas où le message 10 n'a pas été visualisé à l'écran 4 mais seulement mémorisé à l'aide d'un moyen de mémorisation tel qu'un magnétoscope, voire la mémoire 26, la valeur 13 n'est pas mise à disposition du destinataire. Pour cela, il faut attendre une visualisation à l'écran 4 à partir de la mémoire où le message 10 a été mémorisé et attendre une production du deuxième certificat d'authentification et de le comparer avec le premier certificat d'authentification du message 12.

## Revendications

1. Procédé de gestion d'un message reçu dans un terminal (1) multimédia comportant un écran (4) de visualisation caractérisé en ce que :
- on produit un message (10) rémunérateur comportant un message (11) à visualiser et un message (12) de crédit associé au message (11) à visualiser, le message de crédit comportant une valeur (13) de crédit et un premier certificat (14) d'authentification,
- on émet le message (10) rémunérateur,
- on reçoit le message (10) rémunérateur en entrée du terminal (1) multimédia,
- on mémorise dans une mémoire (21) temporaire la valeur (13) de crédit et le premier certificat d'authentification,
- on produit un deuxième certificat d'authentification relatif à une visualisation du message à visualiser avec l'écran (4) de visualisation,
- on compare le premier certificat avec le deuxième certificat,
- on valide, en fonction d'un résultat de la comparaison, une autorisation de mettre la valeur (13) de crédit à disposition d'un destinataire du message (10) rémunérateur.

2. Procédé selon la revendication 1 caractérisé en ce que pour produire le deuxième certificat d'authentification :
- on émet un message (25) interactif de contrôle permettant d'interroger le destinataire à propos du message à visualiser,
- on produit le deuxième certificat à partir d'une réponse, associée au message (25) interactif de contrôle, fournie par le destinataire.

3. Procédé selon la revendication 2 caractérisé en ce que :
- on visualise le message (25) interactif de contrôle sous forme d'un questionnaire relatif au message à visualiser,
- on produit le deuxième certificat à partir d'une réponse au questionnaire.

4. Procédé selon l'une des revendications 2 ou 3 caractérisé en ce que :
- on place le message (25) interactif de contrôle dans le message (10) rémunérateur.

5. Procédé selon l'une des revendications 1 à 4 caractérisé en ce que:
- on met la valeur (13) de crédit à disposition du destinataire en mémorisant, dans une mémoire (26) permanente, cette valeur (13) de crédit.

6. Procédé selon la revendication 5 caractérisé en ce que :
- on place la mémoire (26) permanente dans le terminal (1) multimédia.

7. Procédé selon la revendication 5 caractérisé en ce que :
- on munit le terminal (1) multimédia d'un lecteur (28) de carte à puce,
- on place la mémoire (26) permanente dans une carte (29) à puce.

8. Procédé selon l'une des revendications 1 à 7 caractérisé en ce que:
- on chiffre, lors de la production du message (10) rémunérateur, la valeur (13) de crédit.

9. Procédé selon l'une des revendications 5 à 7 et 8 caractérisé en ce que :
- on mémorise une première clé de déchiffrement dans la mémoire (26) permanente, cette première clé de déchiffrement permettant de déchiffrer la valeur de crédit chiffrée.

10. Procédé selon l'une des revendications 1 à 9 caractérisé en ce que :
- on chiffre, lors de la production du message (10) rémunérateur, le message (12) de crédit.

11. Procédé selon l'une des revendications 5 à 9 et 10 caractérisé en ce que :
- on mémorise une deuxième clé de déchiffrement dans la mémoire (26) permanente, cette deuxième clé de déchiffrement permettant de déchiffrer le message (12) de crédit chiffré.
